# EUROPÄISCHE PATENTSCHRIFT

(11) **EP 2 943 390 B1**
(45) Veröffentlichungstag und Bekanntmachung des Hinweises auf die Patenterteilung: **19.07.2017**
(21) Anmeldenummer: 13774063.5
(22) Anmeldetag: 09.09.2013
(51) Int. Cl.: B62D 5/00, F16H 1/30

(54) **WINKELÜBERLAGERUNGSEINRICHTUNG FÜR EINE FAHRZEUGLENKVORRICHTUNG**
ANGLE SUPERIMPOSITION APPARATUS FOR A VEHICLE STEERING DEVICE
DISPOSITIF DE SUPERPOSITION D'ANGLES DESTINÉ AU SYSTÈME DE DIRECTION D'UN VÉHICULE

(30) Priorität: 09.01.2013 CH 1032013
(43) Veröffentlichungstag der Anmeldung: 18.11.2015
(73) Patentinhaber: ThyssenKrupp Presta AG, 9492 Eschen (LI); thyssenkrupp AG, 45143 Essen (DE)
(72) Erfinder: GALEHR, Robert, FL-9493 Mauren (LI)
(74) Vertreter: thyssenkrupp Intellectual Property GmbH
(86) Internationale Anmeldenummer: PCT/EP2013/002694
(87) Internationale Veröffentlichungsnummer: WO 2014/108144

(56) Entgegenhaltungen:
- EP-A1- 2 216 233
- DE-A1-102004 031 349
- FR-A1- 2 429 936

## Beschreibung

Die Erfindung bezieht sich auf eine Winkelüberlagerungseinrichtung für eine Fahrzeuglenkvorrichtung gemäss den Merkmalen des Oberbegriffs des Patentanspruches 1.

Die Erfindung betrifft insbesondere eine Winkelüberlagerungseinrichtung mit Hilfsantrieb für ein Lenksystem für nicht spurgebundene Kraftfahrzeuge die, die Drehzahlen des Hilfsantriebes und der Steuereingriffe am Steuerrad durch den Fahrer überlagert und auf die Lenkbewegung der Räder überträgt. Synonym zum Begriff Winkelüberlagerungseinrichtung werden auch die Begriffe Drehwinkelüberlagerungseinrichtung, Lenkwinkelüberlagerungseinrichtung oder auch Drehzahlüberlagerungseinrichtung verwendet.

Im Stand der Technik sind eine Reihe derartiger Systeme bekannt, wobei das Drehzahlüberlagerungsgetriebe der Winkelüberlagerungseinrichtung durch ein Planetengetriebe realisiert wird oder auch zusätzlich ein Schneckenradgetriebe aufweist.

So ist in der DE19823721A1 eine derartige Winkelüberlagerungseinrichtung vorgestellt. Hier wird durch ein Steuerrad ein Gehäuse angetrieben, in dem sich Verzahnungen eines Hohlrades zweier Planetengetriebe befinden. Ein in dem Gehäuse angeordneter Elektromotor treibt das Sonnenrad des ersten Planetengetriebes an. Der Planetenträger des ersten Planetengetriebes treibt das Sonnenrad des zweiten Planetengetriebes an. Die Planeten des zweiten Planetengetriebes stützen sich am Hohlrad des Gehäuses ab und der Planetenträger ist mit der Ausgangswelle verbunden. In der gezeigten Ausführungsform ist der Antrieb des Sonnenrades des ersten Planetengetriebes direkt durch den Rotor des Elektromotors realisiert. Durch eine entsprechende Ansteuerung des Elektromotors können die gewünschten Drehzahlüberlagerungen dargestellt werden. Diese im Stand der Technik gezeigte Lösung besitzt aber einige entscheidende Nachteile. Derartige Getriebe bestehen aus einer Vielzahl von Bauteilen. Es werden zwei Hohlzahnradkränze bzw. Planetengetriebe benötigt. Die Herstellung der Einzelteile ist sehr aufwändig und teuer. Die Vielzahl der Zahneingriffe führt zu sehr hohen Genauigkeitsanforderungen, um Spiele zu vermeiden. Weiter muss die gesamte Einrichtung, inklusive Motorgehäuse, vom Fahrer beim Steuern mit gedreht werden. Ein weiterer Nachteil besteht zudem in der aufwendigen Einkopplung der elektrischen Energie für den Elektromotor.

In einem weiteren Stand der Technik, der DE19852447A1, wird eine Lösung zur Drehzahlüberlagerung vorgestellt, bei der ein Elektromotor über einen Schneckenantrieb an das, als Planetengetriebe ausgebildete, Überlagerungsgetriebe angekoppelt ist. Hier ist die Getriebeeinheit karosseriefest angeordnet. Allerdings sind auch mit dieser Lösung eine Reihe von Nachteilen verbunden. Die Einkopplung über ein Schneckengetriebe führt zu sehr kleinen Wirkungsgraden der Drehzahlübersetzung. Weiterhin benötigt die Anordnung erheblichen Bauraum, der, durch die geometrisch bestimmten Lagen der Komponenten zueinander, wenig flexibel ist. Auch hier ist die Herstellung der Einzelteile aufwändig und teuer und die Anforderungen an die Herstelltoleranzen entsprechend hoch.

Aus der DE 10 2004 031349 A1 ist eine Winkelüberlagerungseinrichtung für eine Fahrzeuglenkvorrichtung mit einem Getriebe bekannt, welche die gattungsbildenden Merkmale des Anspruchs 1 aufweist. Nachteilig daran ist ebenfalls die große Anzahl der Bauteile und die hohen Anforderungen an die Genauigkeit.

Die Aufgabe der vorliegenden Erfindung besteht darin, die Nachteile des Standes der Technik zu beseitigen und gleichzeitig eine kompakte Baugruppe bereit zu stellen, die eine Winkelüberlagerung mit einer reduzierten Anzahl von Bauteilen und geringeren Genauigkeitsanforderungen gestattet. Weiter soll die Verbindung der Energieversorgung des Hilfsantriebes sowie mit im Bedarfsfall verwendeten Sensoren vereinfacht werden.

Die Aufgabe wird erfindungsgemäss durch die Winkelüberlagerungseinrichtung entsprechend dem Anspruch 1 gelöst. Die abhängigen Ansprüche 2 bis 17 betreffen bevorzugte Ausführungsformen der Winkelüberlagerungseinrichtung.

Dabei wird eine Winkelüberlagerungseinrichtung für eine Fahrzeuglenkvorrichtung mit einem Getriebe vorgeschlagen welche umfasst:
- eine erste Welle und eine zweite Welle, welche in Längsrichtung zueinander drehbar um deren gemeinsame Längsachse angeordnet sind,
- eine karosseriefest angeordnete Trägeranordnung, an welcher die erste Welle und die zweite Welle und eine Rotorwelle mindestens teilweise gelagert, drehbar positioniert sind,
- einen Hilfsantrieb mit einem an der Trägeranordnung angeordnetem Stator und mit einer zur Längsachse und einer der Wellen koaxial angeordneten, drehbar gelagerten Rotorwelle mit einem Rotor,
- ein Planetengetriebe mit einer Schnecke, die um eine Drehachse drehbar als Sonnenrad angeordnet ist, welche an der Rotorwelle angeordnet ist und im Eingriff steht mit der Verzahnung von mindestens zwei Planetenrädern, die jeweils mit einer Planetenradachse auf einem Planetenträger angeordnet sind, wobei die Planetenräder wiederum im Eingriff stehen mit der Innenverzahnung eines Hohlrades,
- wobei der Planetenträger drehfest mit der zweiten Welle verbunden ist und das Hohlrad drehfest mit der ersten Welle verbunden ist,
- und wobei der Hilfsantrieb eine zwischen der ersten Welle und der zweiten Welle übertragene Drehbewegung überlagert.

Hierbei wird die Schnecke mit Vorteil derart angeordnet, dass deren Drehachse mit der Längsachse zusammenfällt. Die Verzahnung der Schnecke ist mindestens eingängig ausgebildet. Dabei ist die Ausbildung der Verzahnung mit weniger als vier Gängen zu bevorzugen. Die Schnecke ist besonders bevorzugt mit einer eingängigen Verzahnung ausgebildet.

Um den Eingriff der Planetenräder mit der Schnecke und der Innenverzahnung des Hohlrades in geeigneter Weise sicher zu stellen, wird bevorzugt zumindest eine der Planetenradachsen derart angeordnet, dass sich diese mit der Längsachse nicht schneiden und nicht parallel zueinander ausgerichtet sind. Vorzugsweise sollten alle Planetenradachsen sich nicht mit der Längsachse schneiden und nicht parallel zueinander ausgerichtet sein.
Mit Vorteil werden alle Planetenradachsen derart angeordnet, dass diese sich jeweils paarweise zueinander nicht schneiden und jeweils paarweise nicht parallel zueinander ausgerichtet sind. Es ist auch möglich, dass nur zwei Plantenradachsen sich nicht schneiden und nicht parallel sind, währen die anderen Planeteradachsen dies wahlweise tun können.

Mit Vorteil liegen die Winkel, von einer Projektionsebene aus gesehen, zwischen einer oder mehreren der Planetenradachsen und der Längsachse im Bereich zwischen von einschliesslich 5° bis einschliesslich 65°, mehr bevorzugt im Bereich von einschliesslich 25° bis einschliesslich 65°. Bereiche von 40° bis 50° sind besonders zu bevorzugen. Der kleinste Abstand zwischen den Planetenradachsen und der Längsachse liegt mit Vorteil in einem Bereich von einem drittel Planetenraddurchmesser bis einschliesslich der Summe aus einem ganzen Planetenraddurchmesser und dem ganzem Sonnenraddurchmesser. Zu bevorzugen sind Abstände im Bereich zwischen der Summe aus einem drittel Planetenraddurchmesser und einem drittel Sonnenraddurchmesser bis zur Summe aus zwei drittel Planetenraddurchmesser und zwei drittel Sonnenraddurchmesser.

Die erste Welle und die zweite Welle können in ihrer Funktion vertauscht betrieben werden. Folglich kann die erste Welle die Antriebswelle und die zweite Welle die Abtriebswelle sein oder die erste Welle kann die Abtriebswelle und die zweite Welle die Antriebswelle sein.

Im Fehlerfall oder besonderen Fahrzeugsituationen - wie beispielsweise Stromausfall, Ausfall der Steuerung oder ausgeschaltete Zündung etc. sollte eine direkte mechanische Kopplung zwischen An- und Abtriebswelle vorhanden sein, so dass der Fahrer die vollständige Kontrolle über das Lenkungssystem erhält. Bei der vorliegenden, erfindungsgemässen Winkelüberlagerungseinrichtung ist dies an sich bereits gewährleistet, da durch die Einbindung einer Schnecke als Sonnenrad des Planetengetriebes ein Selbsthemmungseffekt auftritt bei nicht eingeschaltetem Antrieb der Winkelüberlagerungseinrichtung. In einer vorteilhaften Weiterbildung kann in das Winkelüberlagerungseinrichtung auch noch zusätzlich eine Sicherheitskupplung bzw. eine Schaltung integriert werden, die im Fehlerfall oder besonderen Fahrzeugsituationen - wie beispielsweise Stromausfall, Ausfall der Steuerung oder ausgeschaltete Zündung usw. - eine direkte mechanische Kopplung zwischen An- und Abtriebswelle erzwingt, so dass der Fahrer die vollständige Kontrolle über das Lenkungssystem erhält. Die Kopplung kann beispielsweise in sehr einfacher Weise durch das Blockieren des Rotors des Hilfsantriebes in Bezug auf den Stator beziehungsweise das Gehäuse der Einrichtung erfolgen. Dadurch kann zusätzlich eine erhöhte Sicherheit gewährleistet werden. Es ist entsprechend denkbar möglich, eine direkte mechanische Kopplung zwischen dem Planetenträger und dem Sonnenrad oder eine direkte mechanische Kopplung zwischen Planetenträger und Hohlrad oder eine direkte mechanische Kopplung zwischen Hohlrad und Sonnenrad als redundante Sicherheitskupplung vorzusehen. Dabei sind bekannte Reibkupplungen und/oder Formschlusskupplungen anwendbar.

Die Erfindung wird nun anhand von Figuren schematisch und beispielsweise beschrieben.

Es zeigen:
- Fig. 1: in dreidimensionaler Darstellung eine Fahrzeuglenkvorrichtung mit Hilfskraftunterstützung und einer Winkelüberlagerungseinrichtung,
- Fig. 2: in Seitenansicht eine Winkelüberlagerungseinrichtung,
- Fig. 3: einen Längsschnitt der Winkelüberlagerungseinrichtung gemäss der Erfindung,
- Fig. 4: einen Querschnitt durch die Winkelüberlagerungseinrichtung im Bereich des als Schnecke ausgebildeten Sonnenrades mit den Planetenrädern und dem Hohlrad gemäss der Erfindung,
- Fig. 5: eine weitere Schnittdarstellung der Winkelüberlagerungseinrichtung, wobei die Schnittebene durch die Achse eines der Planetenräder gelegt ist,
- Fig. 6: in dreidimensionaler Explosionsdarstellung eine Winkelüberlagerungseinrichtung entsprechend den vorhergehenden Figuren 3 bis 5,
- Fig. 7: in dreidimensionaler Darstellung die Rotorwelle mit dem Sonnenrad als Schnecke, die mit einem Planetenrad als Beispiel im Eingriff ist, wobei das Planetenrad im Eingriff mit der Innenverzahnung des Hohlrades ist,
- Fig. 8: in dreidimensionaler Darstellung, beispielsweise, ein einzelnes Planetenrad im Eingriff mit der Schnecke des Sonnenrades und mit verschiedenen Bereichen der Verzahnung des Planetenrades,
- Fig. 9: in dreidimensionaler Darstellung ein Planetenrad mit dessen Verzahnung und mit verschiedenen Bereichen der Verzahnung,
- Fig. 10: in einer weiteren dreidimensionalen Darstellung die Rotorwelle mit dem Sonnenrad als Schnecke, die mit fünf Planetenrädern als Beispiel im Eingriff ist,
- Fig. 11: in dreidimensionaler der Planetenträger mit Ausnehmungen zur gelagerten Aufnahme von Planetenrädern.

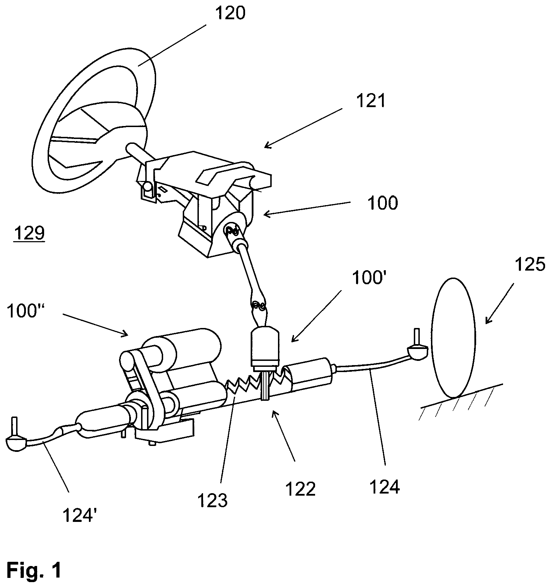

Der in Figur 1 gezeigte schematische Aufbau einer Lenkvorrichtung 129 als Lenkvorrichtung 129 mit elektrischer Hilfskraftunterstützung entspricht im Wesentlichen dem Stand der Technik. Sie besteht unter anderem aus einem Steuerrad 120, einer Lenksäule 121, dem Lenkgetriebe 122 und den beiden Spurstangen 124, 124', die auf beiden Seiten mit je einem Rad 125 verbunden sind zu dessen Verschwenkung. Die Spurstangen 124, 124' werden durch die Zahnstange 123 angetrieben. Zur Drehzahlüberlagerung dient die erfindungsgemässe Winkelüberlagerungseinrichtung 100, 100'. Dabei kann die Winkelüberlagerungseinrichtung 100', die wie bereits ausgeführt auch als Drehzahlüberlagerungseinrichtung bezeichnet werden kann, auch direkt in das Lenkgetriebe 122 integriert sein. Im Beispiel umfasst die Lenkvorrichtung eine Hilfsfkraftunterstützung mit Hilfsantrieb 100" zur Ausbildung einer elektrisch unterstützten Lenkhilfe. Die Hilfskraftuntertützung zur Einkopplung einer Hilfssteuerkraft kann im Bereich des Lenkgetriebes, wie im Beispiel gezeigt, oder der Lenksäule angeordnet werden, separat oder auch in Kombination mit der Winkelüberlagerungseinrichtung 100, 100',.

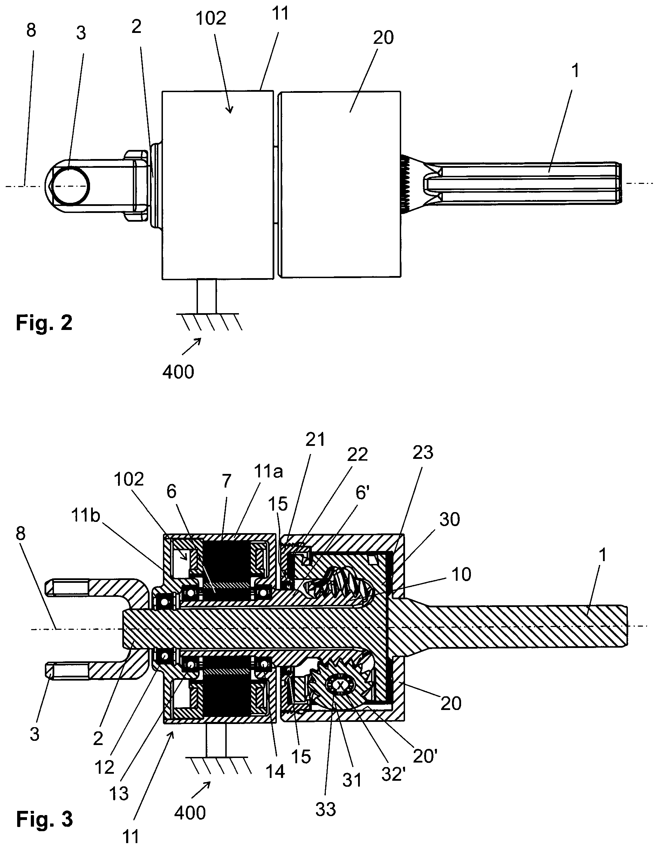

In der bevorzugten Ausführungsform befindet sich die Winkelüberlagerungseinrichtung zwischen Steuerrad 120 und Lenkgetriebe 122, beispielsweise näher zum Lenkrad 120 hin angeordnet an der mit 100 gekennzeichneten Stelle. In den Figuren 2 und 3 ist diese Ausführungsform der Winkelüberlagerungseinrichtung 100 näher gezeigt.

In einer weiteren Ausführungsform wird die Winkelüberlagerungseinrichtung zwischen Lenkgetriebe 122 und Spurstangen 124 oder im Lenkgetriebe angeordnet. Die Winkelüberlagerungseinrichtung enthält dann ein Umwandlungsgetriebe zur Übersetzung der Drehbewegung in eine Translationsbewegung, beispielsweise einen Kugelgewindetrieb oder eine Kugelgewindemutter.

In allen Ausführungsformen wird - im Normalfall - der Fahrerwunsch durch das Steuerrad 120 über eine hier nicht gezeigte Sensorik als Signal in ein Steuergerät eingespeist. Im Steuergerät wird daraus, gegebenenfalls unter Zuhilfenahme eines Sensorsignals des Hilfsantriebes des Lenksystems (Signalleitung hier nicht dargestellt) und/oder der Winkelüberlagerungseinrichtung und weiterer den Fahrzeugzustand beschreibender Signale, die entsprechende Steuerspannung für den Elektromotor bestimmt und an den Elektromotor, in der Winkelüberlagerungseinrichtung 100 bzw. 100' und / oder den Hilfsantrieb 100" für die elektrisch unterstützte Lenkhilfe ausgegeben.

Die Erfindung bezieht sich auf eine Winkelüberlagerungseinrichtung 100, 100' in der Anordnung in einem Lenksystem 129 für ein Kraftfahrzeug. Die erfindungsgemässe Winkelüberlagerungseinrichtung kann dabei in einem Lenksystem mit oder ohne Hilfskraftunterstützung eingesetzt sein. Neben dem Einsatz einer erfindungsgemässen Winkelüberlagerungseinrichtung ist es auch möglich eine eventuell vorhandene Hilfskraftunterstützung des Lenksystems hydraulisch, pneumatisch oder elektrisch, beispielsweise auch nach dem vorliegenden erfindungsgemässen Antriebskonzept, zu realisieren.

Die erfindungsgemässe Fahrzeuglenkvorrichtung, entsprechend den Ausführungsbeispielen, enthält eine Winkelüberlagerungseinrichtung 100, 100' mit einem vorzugsweise elektrischen Antrieb 102, der über ein Planetengetriebe 10, 11, 20, 31 mit einer zweiten Welle, beispielsweise der Abtriebswelle 2 mit der Längsachse 8, mit einem Lenkgetriebe 122 verbunden ist.

Diese Antriebsvorrichtung mit dem Planetengetriebe kann sowohl für eine elektrisch unterstützte Lenkhilfe, wie auch für eine Winkelüberlagerungseinrichtung mit Vorteil eingesetzt werden. Als Winkelüberlagerungseinrichtung ist die Anordnung besonders geeignet.
Die Details der Erfindung werden nun Anhand der Figuren 2 bis 11 mit verschiedenen Ausführungsbeispielen im weiteren erläutert.

Die Winkelüberlagerungseinrichtung 100 für eine Fahrzeuglenkvorrichtung mit einem Planetengetriebe umfasst:
- eine erste Welle und eine zweite Welle, welche in Längsrichtung zueinander drehbar um deren gemeinsame Längsachse 8 angeordnet sind,
- eine karosseriefest angeordnete Trägeranordnung 11, 11a, 11 b, an welcher die erste Welle und die zweite Welle und eine Rotorwelle 6' mindestens teilweise gelagert, drehbar positioniert sind,
- einen Hilfsantrieb 6, 7 mit einem an der Trägeranordnung 11, 11a, 11 b angeordnetem Stator 7 und mit einer zur Längsachse 8 und einer der Wellen koaxial angeordneten, drehbar gelagerten Rotorwelle 6' mit einem Rotor 6,
- ein Planetengetriebe mit einer Schnecke 10, die um eine Drehachse drehbar als Sonnenrad angeordnet ist, welche an der Rotorwelle 6' angeordnet ist und im Eingriff steht mit der Verzahnung von mindestens zwei Planetenrädern 31, die jeweils mit einer Planetenradachse 32' auf einem Planetenträger 30 angeordnet sind, wobei die Planetenräder 31 wiederum im Eingriff stehen mit der Innenverzahnung 20' eines Hohlrades 20,
- wobei der Planetenträger 30 drehfest mit der zweiten Welle verbunden ist und das Hohlrad 20 drehfest mit der ersten Welle verbunden ist,
- und wobei der Hilfsantrieb 6, 7 eine zwischen der ersten Welle und der zweiten Welle übertragene Drehbewegung überlagert.

Die Trägeranordnung 11 beinhaltet vorzugsweise einen elektrischen Antrieb 102 als Hilfsantrieb und ist karosseriefest am Fahrgestell 400 angeordnet, wie dies in den Figuren 2 und 3 schematisch dargestellt ist. Der Stator 7 ist in dieser Trägeranordnung 11 fest eingebaut und dreht somit nicht mit. Die Trägeranordnung 11 wird beispielsweise mit einem Gehäuse umschlossen das aus einem ersten Gehäuseteil 11a und einem zweiten Gehäuseteil in Form eines Deckels 11 b besteht. Das Hohlrad 20 ist drehfest mit der ersten Welle verbunden und beispielsweise derart drehbar gelagert, dass dieses unmittelbar neben dem Antrieb positioniert ist. Die zweite Welle wird beispielsweise durch die Trägeranordnung 11 mit dem Antrieb 102 hindurch geführt und steht dann dort beispielsweise als Abtriebswelle 2 zur Verfügung welche mit einem Gelenk 3 verbunden sein kann, das die Drehbewegung an das Lenkgetriebe weiter gibt. In diesem Fall ist die erste Welle die Antriebswelle, welche mit dem Steuerrad 120 verbunden ist.

Wie in den Figuren 2, 3 und 6 gezeigt, ist fallen die Drehachse der Schnecke 10 mit der Längsachse 8 zusammen. Sie besitzen somit eine gemeinsame Längsachse 8.

Die Planetenräder 31 sind derart um die Längsachse 8 angeordnet, dass zumindest eine der Planetenradachsen 32' und die Längsachse 8 sich nicht schneiden und nicht parallel zueinander ausgerichtet sind, wie dies in den Figuren 3 bis 8 und den Figuren 10 und 11 dargestellt ist. Die Planetenräder 31 sind hingegen mit Vorteil derart angeordnet, dass alle Planetenradachsen 32' und die Längsachse 8 sich nicht schneiden und nicht parallel zueinander ausgerichtet sind.
Die Planetenräder 31 können auch derart angeordnet werden, dass alle Planetenradachsen 32' jeweils paarweise zueinander sich nicht schneiden und jeweils paarweise nicht parallel zueinander ausgerichtet sind.

Eine weitere bevorzugte Ausbildung einer erfindungsgemässen Winkelüberlagerungseinrichtung wird derart ausgebildet, dass:
- der Stator 7 mit dem zur zweiten Welle koaxial angeordneten Rotor 6 mit der Rotorwelle 6' mit einer Lagerung 13, 14 drehbar gelagert ist und mit eine Lagerung 12 zur drehbaren Positionierung der zweiten Welle gegenüber der Trägeranordnung 11, 11 a, 11 b vorgesehen ist,
- wobei die Schnecke 10 als eine Verzahnung an einem Endbereich der Rotorwelle 6', in Richtung der ersten Welle, ausgebildet ist,
- wobei der Planetenträger 30 stirnseitig, in Richtung der ersten Welle, mit der zweiten Welle verbunden ist, wobei dieser glockenförmig ausgebildet ist und die Schnecke 10 an der Rotorwelle 6' stirnseitig umschliesst, wobei der Planetenträger 30 Ausnehmungen 35 aufweist, zur Aufnahme eines drehbar gelagerten Planetenrades 31 mit der Planetenradachse 32' innerhalb je einer der Ausnehmungen, wobei mindestens zwei Planetenräder 31 vorgesehen sind,
- wobei das Hohlrad 20, das mit eine Innenverzahnung 20' aufweist und, welches drehfest mit der ersten Welle verbunden ist und den glockenförmigen Planetenträger 30 koaxial umschliesst, derart dass die Planetenräder 31 zwischen der Schnecke 10 und dem Hohlrad 20 positioniert sind und mit ihren Verzahnungen 31' im Eingriff mit der Schnecke 10 und der Innenverzahnung 20' des Hohlrades 20 sind, wodurch eine Getriebeanordnung gebildet ist,
- wobei eine Lagerung 22, 23 vorgesehen ist, zur axialen Lagerung des Hohlrades 20 gegenüber dem Planetenträger 30, wobei je ein Axiallager 22, 23, in axialer Richtung zur Längsachse 8 beabstandet voneinander, stirnseitig und beidseitig zum Planetenträger 30 angeordnet sind zwischen dem Planetenträger 30 und seitlichen Flanken des Hohlrades 20.

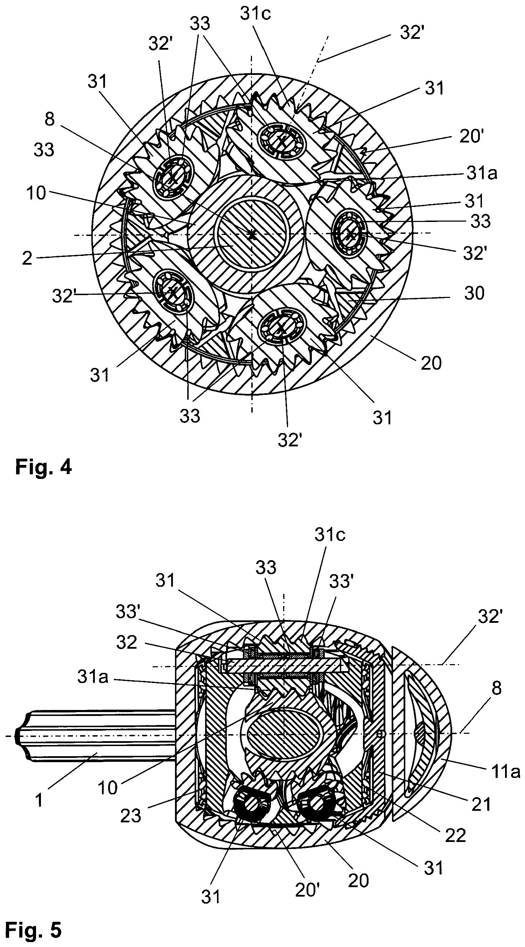

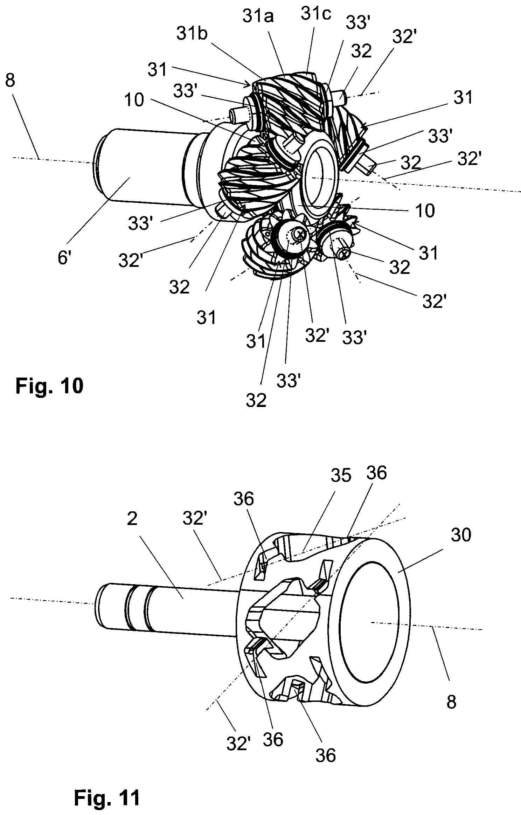

Weiter kann zur Bildung der jeweiligen Panetenradachse 32' ein Planetenradachsbolzen 32 vorgesehen werden, der auf beiden Seiten des Planetenrades 31 herausragt. Dieser wird beidseitig in je einer Vertiefung 36 des Planetenträgers 30 angeordnet, die seitlich an einer der Ausnehmungen 35 des Planetenradträgers 30 vorgesehen sind, wie dies in den Figuren 3 bis 5 und den Figuren 10 und 11 beispielsweise dargestellt ist.
Um einen ruhigen Lauf der Planetenräder 31 mit geringem Verschleiss zu erzielen wird das Planetenrad 31 gegenüber seinem zugehörigen Planeteradachsbolzen 32 mit einer Planetenradlagerung 33, 33' drehbar gelagert. Beispielsweise kann eine erste Planetenradlagerung 33 zwischen dem Planetenradachsbolzen 32 und dem Planetenrad 31 als radiale Lagerung angeordnet werden, wie dies in den Figuren 3 bis 5 gezeigt ist.
Es kann wie in den Figuren 5 und 10 gezeigt ist zusätzlich, mit Vorteil, eine weitere Planetenradlagerung 33' stirnseitig und auf beiden Seiten des Planetenrades 31 eine axiale Lagerung 33' angeordnet werden, um auch die Reibung zwischen dem Planetenrad 31 und dem Planetenträger 30 in axialer Richtung zu verringern. Vorteilhaft ist, wenn der Planetenträger 30 mindestens drei drehbar gelagerten Planetenräder 31 aufnimmt, die in je einer Ausnehmung 35 angeordnet sind. Weiter ist vorteilhaft wenn die Verzahnung an der Rotorwelle 6' als Schnecke 10 mindestens eingängig, bevorzugt jedoch maximal fünfgängig, oder noch besser maximal dreigängig ausgebildet ist. Besonders zu bevorzugen ist die eingängig Ausgestaltung der Schnecke 10.

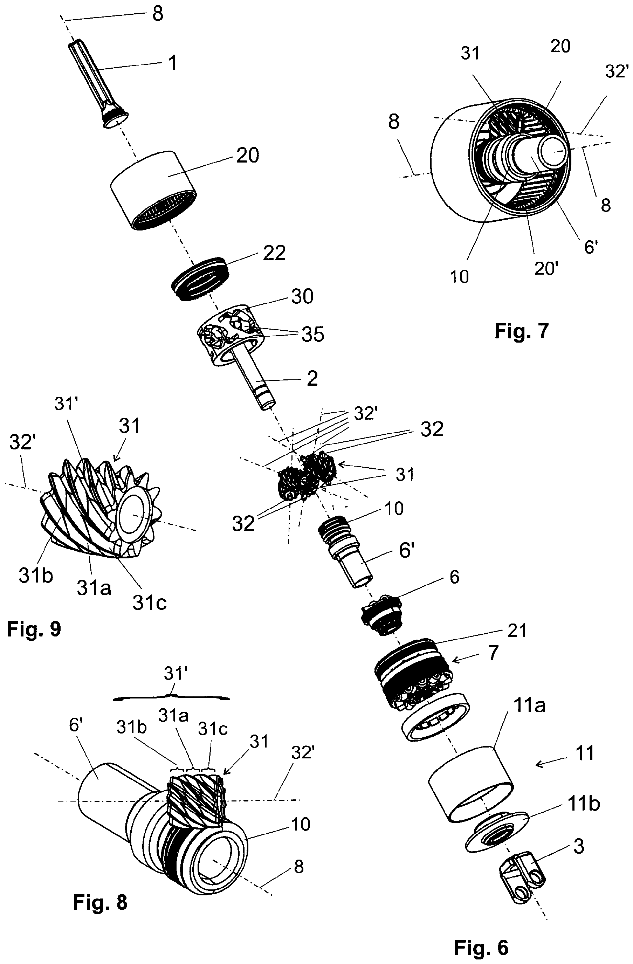

Besonders gute Laufeigenschaften des Planetengetriebes können erreicht werden, indem die Planetenradverzahnung 31' an den Planetenrädern 31 schräg gestellt ist, wie dies aus den Figuren 3 und 7 bis 10 ersichtlich ist. Dadurch kann der Eingriff der Planetenradverzahnung 31' mit der Hohlradinnenverzahnung 20' und der Schnecke 10 gut abgestimmt werden. Weiterhin kann dieser Eingriff optimiert werden durch zusätzliche spezielle Formgebung der Planetenradverzahnung 31', wie beispielsweise einer leichten Verdrehung der Zahnreihen am Planetenrad 31. Es ist auch möglich zusätzlich die Hohlradinnenverzahnung 20' entsprechend optimiert anzupassen und mit einer speziellen Verzahnung zu versehen, wie beispielsweise einer Schrägstellung oder anderen Formen. Dabei hat es sich gezeigt, dass durch die spezielle Ausbildung der Verzahnung 31' der Planetenräder, insbesondere mit den Verzahnungsbereichen 31 a, 31 b, 31 c eine sich in Richtung der Längsachse 8 erstreckende gerade Hohlradinnenverzahnung 20' besonders geeignet sein kann. Auf diese Art können die Verzahnungen des Planetengetriebes mit der Schnecke 10, dem Hohlrad 20 und den Planetenrädern 31 dadurch optimiert werden und somit geringe Laufgeräusche auch bei hohen Getriebeübersetzungen und mit hohem Wirkungsgrad erzielt werden.
Eine weitere Verbesserung wird ermöglicht wenn die Verzahnung 31' an den Planetenrädern 31 derart geformt ist, dass diese für die Bereiche der Verzahnungseingriffe in die Schnecke 10 und in die Verzahnung 20' des Hohlrades 20 optimiert ist. Dies kann vorteilhaft dadurch erzielt werden, dass die Verzahnung 31' an den Planetenrädern 31 in der Längsrichtung in verschiedene Verzahnungsbereiche eingeteilt wird, vorzugsweise in drei Verzahnungsbereiche 31 a, 31 b, 31 c, wobei der mittlere Verzahnungsbereich 31 a für den Verzahnungseingriff mit der Schnecke 10 optimiert ist und die beiden äusseren Verzahnungsbereiche 31 b, 31 c für den Verzahnungseingriff mit der Verzahnung 20' des Hohlrades 20 optimiert ist, wie dies in den Figuren 7 bis 9 schematisch dargestellt ist.

Die beteiligten Zahnräder 10, 20, 31 können aus einem Kunststoff gefertigt werden, wodurch auch die speziellen Formgebungen wirtschaftlich herstellbar sind. Dies ist vor allem für die Planetenräder 31 besonders geeignet.

Ein besonders geeignetes und bevorzugtes Ausführungsbeispiel entspricht der schematischen Darstellung der Figuren 2 bis 11.
Hierbei umfasst die Winkelüberlagerungseinrichtung:
- eine Antriebswelle 1 und eine Abtriebswelle 2, welche in Längsrichtung zueinander drehbar um deren gemeinsame Längsachse 8 angeordnet sind,
- eine karosseriefest angeordnete Trägeranordnung 11, 11 a, 11 b mit einem Hilfsantrieb 6,7 mit einem an der Trägeranordnung 11, 11a, 11 b angeordnetem Stator 7 und mit einem zur Abtriebswelle 2 koaxial angeordneten Rotor 6 mit der Rotorwelle 6' die mit einer Lagerung 13, 14 drehbar gelagert ist und mit einer Lagerung 12 der Abtriebswelle zur drehbaren Positionierung gegenüber der Trägeranordnung 11, 11a, 11 b,
- eine Verzahnung des einen Endbereiches der Rotorwelle 6', in Richtung der Antriebswelle 1, wobei diese Verzahnung als Schnecke 10 ausgebildet ist,
- einen Planetenträger 30 der stirnseitig, in Richtung der Antriebswelle 1, mit der Abtriebswelle 2 verbunden ist, wobei dieser glockenförmig ausgebildet ist und die Schnecke 10 an der Rotorwelle 6' stirnseitig umschliesst, wobei der Planetenträger 30 Ausnehmungen 35 aufweist, zur Aufnahme eines drehbar gelagerten Planetenrades 31 mit der Planetenradachse 32' innerhalb je einer der Ausnehmungen, wobei mindestens zwei Planetenräder 31 vorgesehen sind,
- ein Hohlrad 20 mit einer Innenverzahnung 20' welches drehfest mit der Antriebswelle 1 verbunden ist und den glockenförmigen Planetenträger 30 koaxial umschliesst, derart dass die Planetenräder 31 zwischen der Schnecke 10 und dem Hohlrad 20 positioniert sind und mit ihren Verzahnungen im Eingriff mit der Schnecke 10 und der Innenverzahnung 20' des Hohlrades 20 sind, wodurch eine Getriebeanordnung gebildet wird,
- eine Lagerung 22, 23 zur axialen Lagerung des Hohlrades 20 gegenüber dem Planetenträger 30, wobei je ein Axiallager 22, 23, in axialer Richtung zur Längsachse 8 beabstandet voneinander, stirnseitig und beidseitig zum Planetenträger 30 angeordnet sind zwischen dem Planetenträger 30 und seitlichen Flanken des Hohlrades 20,
- wobei zusätzlich eine Hohlradlagerung angeordnet an der Rotorwelle 6 im Bereich zwischen dem Rotor 6 und der Schnecke 10 zur radialen Lagerung des Hohlrades 20 mit der Antriebswelle vorgesehen sein kann,

Alternativ und bevorzugt zur Hohlradlagerung kann auch eine Abdichtung 15 vorgesehen sein, zur Abdichtung des Planetenradgetriebes. Diese Variante ist zu bevorzugen, da durch die radial schwimmende Lagerung eine Überbestimmung der Getriebeanordnung verhindert wird. Als Abdichtung 15 kann ein Wellendichtring vorgesehen sein.

Es ist hierbei kann es von Vorteil sein, wenn stirnseitig zum Hohlrad 20, dieses mit einem ringförmigen Hohlraddeckel 21 versehen ist, welcher das Hohlrad 20 die Abdichtung 15 abstützt.

Die Funktionen der ersten Welle und der zweiten Welle können vertauscht sein. Die erste Welle kann die Antriebswelle 1 und die zweite Welle die Abtriebswelle 2 sein, was bevorzugt ist.
Die erste Welle kann aber auch die Abtriebswelle 2 sein, wobei dann die zweite Welle die Antriebswelle 1 ist.

## Patentansprüche

1. Winkelüberlagerungseinrichtung für eine Fahrzeuglenkvorrichtung mit einem Getriebe umfassend:
- eine erste Welle und eine zweite Welle, welche in Längsrichtung zueinander drehbar um deren gemeinsame Längsachse (8) angeordnet sind,
- eine karosseriefest angeordnete Trägeranordnung (11,11 a,11 b), an welcher die erste Welle und die zweite Welle und eine Rotorwelle (6') mindestens teilweise gelagert, drehbar positioniert sind,
- einen Hilfsantrieb (6, 7) mit einem an der Trägeranordnung (11, 11a, 11 b) angeordnetem Stator (7) und mit einer zur Längsachse (8) und einer der Wellen koaxial angeordneten, drehbar gelagerten Rotorwelle (6') mit einem Rotor (6),
- und wobei der Hilfsantrieb (6, 7) eine zwischen der ersten Welle und der zweiten Welle übertragene Drehbewegung überlagert, **gekennzeichnet durch**
- ein Planetengetriebe mit einer Schnecke (10), die um eine Drehachse drehbar als Sonnenrad angeordnet ist, welche an der Rotorwelle (6') angeordnet ist und im Eingriff steht mit der Verzahnung von mindestens zwei Planetenrädern (31), die jeweils mit einer Planetenradachse (32') auf einem Planetenträger (30) angeordnet sind, wobei die Planetenräder (31) wiederum im Eingriff stehen mit der Innenverzahnung (20') eines Hohlrades (20),
- wobei der Planetenträger (30) drehfest mit der zweiten Welle verbunden ist und das Hohlrad (20) drehfest mit der ersten Welle verbunden ist.

2. Winkelüberlagerungseinrichtung nach Anspruch 1, **dadurch gekennzeichnet, dass** die Drehachse der Schnecke (10) mit der Längsachse (8) zusammenfällt.

3. Winkelüberlagerungseinrichtung nach einem der vorhergehenden Ansprüche, **dadurch gekennzeichnet, dass** zumindest eine der Planetenradachsen (32') und die Längsachse (8) sich nicht schneiden und nicht parallel zueinander ausgerichtet sind.

4. Winkelüberlagerungseinrichtung nach einem der vorhergehenden Ansprüche, **dadurch gekennzeichnet, dass** alle Planetenradachsen (32') und die Längsachse (8) sich nicht schneiden und nicht parallel zueinander ausgerichtet sind.

5. Winkelüberlagerungseinrichtung nach einem der vorhergehenden Ansprüche, **dadurch gekennzeichnet, dass** alle Planetenradachsen (32') jeweils paarweise zueinander sich nicht schneiden und jeweils paarweise nicht parallel zueinander ausgerichtet sind.

6. Winkelüberlagerungseinrichtung nach einem der vorhergehenden Ansprüche, **dadurch gekennzeichnet, dass :**
- der Stator (7) mit dem zur zweiten Welle koaxial angeordneten Rotor (6) mit der Rotorwelle (6') mit einer Lagerung (13, 14) drehbar gelagert ist und mit einer Lagerung (12) der zweiten Welle zur drehbaren Positionierung gegenüber der Trägeranordnung (11, 11 a, 11 b),
- wobei die Schnecke (10) als eine Verzahnung an einem Endbereich der Rotorwelle (6'), in Richtung der ersten Welle, ausgebildet ist,
- wobei der Planetenträger (30) stirnseitig, in Richtung der ersten Welle, mit der zweiten Welle verbunden ist, wobei dieser glockenförmig ausgebildet ist und die Schnecke (10) an der Rotorwelle (6') stirnseitig umschliesst, wobei der Planetenträger (30) Ausnehmungen (35) aufweist, zur Aufnahme eines drehbar gelagerten Planetenrades (31) mit der Planetenradachse (32') innerhalb je einer der Ausnehmungen, wobei mindestens zwei Planetenräder (31) vorgesehen sind,
- wobei das Hohlrad (20), das mit eine Innenverzahnung (20') aufweist und, welches drehfest mit der ersten Welle verbunden ist und den glockenförmigen Planetenträger (30) koaxial umschliesst, derart dass die Planetenräder (31) zwischen der Schnecke (10) und dem Hohlrad (20) positioniert sind und mit ihren Verzahnungen im Eingriff mit der Schnecke (10) und der Innenverzahnung (20') des Hohlrades (20) sind, wodurch eine Getriebeanordnung gebildet ist,
- wobei eine Lagerung (22, 23) vorgesehen ist, zur axialen Lagerung des Hohlrades (20) gegenüber dem Planetenträger (30), wobei je ein Axiallager (22, 23), in axialer Richtung zur Längsachse (8) beabstandet voneinander, stirnseitig und beidseitig zum Planetenträger (30) angeordnet sind zwischen dem Planetenträger (30) und seitlichen Flanken des Hohlrades (20).

7. Winkelüberlagerungseinrichtung nach einem der vorhergehenden Ansprüche, **dadurch gekennzeichnet, dass** zur Bildung der jeweiligen Panetenradachse (32') ein Planetenradachsbolzen (32) vorgesehen ist, der auf beiden Seiten des Planetenrades (31) herausragt und in je einer Vertiefung (36) des Planetenträgers (30) angeordnet ist, die seitlich an einer der Ausnehmungen (35) des Planetenradträgers (30) vorgesehen ist.

8. Winkelüberlagerungseinrichtung nach Anspruch 7, **dadurch gekennzeichnet, dass** das Planetenrad (31) gegenüber seinem zugehörigen Planeteradachsbolzen (32) eine Planetenradlagerung (33, 33') aufweist.

9. Winkelüberlagerungseinrichtung nach Anspruch 8, **dadurch gekennzeichnet, dass** eine erste Planetenradlagerung (33) zwischen dem Planetenradachsbolzen (32) und dem Planetenrad (31) als radiale Lagerung angeordnet ist.

10. Winkelüberlagerungseinrichtung nach Anspruch 8 oder 9, **dadurch gekennzeichnet, dass** eine zweite Planetenradlagerung (33') stirnseitig und auf beiden Seiten des Planetenrades (31) als axiale Lagerung angeordnet ist.

11. Winkelüberlagerungseinrichtung nach einem der vorhergehenden Ansprüche, **dadurch gekennzeichnet, dass** der Planetenträger (30) mindestens drei drehbar gelagerten Planetenräder (31) aufnimmt, die in je einer Ausnehmung (35) angeordnet sind.

12. Winkelüberlagerungseinrichtung nach einem der vorhergehenden Ansprüche, **dadurch gekennzeichnet, dass** die Verzahnung an der Rotorwelle (6') als Schnecke (10) mindestens eingängig bevorzugt jedoch maximal dreigängig ausgebildet ist.

13. Winkelüberlagerungseinrichtung nach einem der vorhergehenden Ansprüche, **dadurch gekennzeichnet, dass** die Verzahnung an den Planetenrädern (31) schräg gestellt ist.

14. Winkelüberlagerungseinrichtung nach einem der vorhergehenden Ansprüche, **dadurch gekennzeichnet, dass** die Verzahnung an den Planetenrädern (31) derart geformt ist, dass diese für die Bereiche der Verzahnungseingriffe in die Schnecke (10) und in die Verzahnung (20') des Hohlrades (20) optimiert ist.

15. Winkelüberlagerungseinrichtung nach Anspruch 14, **dadurch gekennzeichnet, dass** die Verzahnung an den Planetenrädern (31) Längsrichtung in drei Verzahnungsbereiche (31 a, 31 b, 31 c) eingeteilt sind, wobei der mittlere Verzahnungsbereich (31 a) für den Verzahnungseingriff mit der Schnecke (10) optimiert ist und die beiden äusseren Verzahnungsbereiche (31 b, 31 c) für den Verzahnungseingriff mit der Verzahnung (20') des Hohlrades (20) optimiert ist.

16. Winkelüberlagerungseinrichtung nach einem der vorhergehenden Ansprüche **dadurch gekennzeichnet, dass** die erste Welle die Antriebswelle (1) und die zweite Welle die Abtriebswelle (2) ist.

17. Winkelüberlagerungseinrichtung nach einem der vorhergehenden Ansprüche **dadurch gekennzeichnet, dass** die erste Welle die Abtriebswelle (2) und die zweite Welle die Antriebswelle (1) ist.

## Claims

1. Angle superposition device for a vehicle steering apparatus having a gear set, comprising:
- a first shaft and a second shaft, which are arranged in a longitudinal direction so as to be rotatable relative to one another about their common longitudinal axis (8),
- a carrier arrangement (11, 11a, 11b) which is arranged fixedly with respect to a body and on which the first shaft and the second shaft and a rotor shaft (6') are at least partially mounted and rotatably positioned,
- a servo drive (6, 7) with a stator (7) arranged on the carrier arrangement (11, 11a, 11b) and with a rotatably mounted rotor shaft (6') arranged coaxially with respect to the longitudinal axis (8) and one of the shafts, which rotor shaft has a rotor (6),
- and wherein the servo drive (6, 7) superposes a rotational movement transmitted between the first shaft and the second shaft, **characterized by**
- a planetary gear set with a worm (10) which is arranged, so as to be rotatable about an axis of rotation, as a sun gear and which is arranged on the rotor shaft (6') and which meshes with the toothing of at least two planet gears (31), which are each arranged with a planet gear axis (32') on a planet carrier (30), wherein the planet gears (31) in turn mesh with the internal toothing (20') of an internal gear (20),
- wherein the planet carrier (30) is connected rotationally conjointly to the second shaft and the internal gear (20) is connected rotationally conjointly to the first shaft.

2. Angle superposition device according to Claim 1, **characterized in that** the axis of rotation of the worm (10) coincides with the longitudinal axis (8).

3. Angle superposition device according to one of the preceding claims, **characterized in that** at least one of the planet gear axes (32') and the longitudinal axis (8) do not intersect and are oriented non-parallel to one another.

4. Angle superposition device according to one of the preceding claims, **characterized in that** all of the planet gear axes (32') and the longitudinal axis (8) do not intersect and are oriented non-parallel to one another.

5. Angle superposition device according to one of the preceding claims, **characterized in that** all of the planet gear axes (32'), in pairs in each case, do not intersect and, in pairs in each case, are oriented non-parallel to one another.

6. Angle superposition device according to one of the preceding claims, **characterized in that**:
- the stator (7), with the rotor (6) which is arranged coaxially with respect to the second shaft and which has the rotor shaft (6'), is rotatably mounted by means of a bearing arrangement (13, 14), and by means of a bearing arrangement (12) of the second shaft for rotatable positioning relative to the carrier arrangement (11, 11a, 11b),
- wherein the worm (10) is in the form of a toothing on an end region of the rotor shaft (6') in the direction of the first shaft,
- wherein the planet carrier (30) is connected at the end side in the direction of the first shaft to the second shaft, wherein said planet carrier is of bell-shaped form and surrounds the worm (10) on the rotor shaft (6') at the end side, wherein the planet carrier (30) has recesses (35) for receiving a rotatably mounted planet gear (31) with the planet gear axis (32') within in each case one of the recesses, wherein at least two planet gears (31) are provided,
- wherein the internal gear (20), which has an internal toothing (20') and, which is connected rotationally conjointly to the first shaft and coaxially surrounds the bell-shaped planet carrier (30), in such a way that the planet gears (31) are positioned between the worm (10) and the internal gear (20) and, by way of the toothings, mesh with the worm (10) and the internal toothing (20') of the internal gear (20), whereby a gearing arrangement is formed,
- wherein a bearing arrangement (22, 23) is provided for the axial mounting of the internal gear (20) relative to the planet carrier (30), wherein in each case one axial bearing (22, 23) is arranged at the end side on both sides of the planet carrier (30), between the planet carrier (30) and lateral flanks of the internal gear (20), said axial bearings being spaced apart from one another in the axial direction with respect to the longitudinal axis (8).

7. Angle superposition device according to one of the preceding claims, **characterized in that**, to form the respective planet gear axis (32'), a planet gear spindle bolt (32) is provided which projects out on both sides of the planet gear (31) and is arranged in in each case one depression (36) of the planet carrier (30), which is provided laterally on one of the recesses (35) of the planet gear carrier (30).

8. Angle superposition device according to Claim 7, **characterized in that** the planet gear (31) has a planet gear bearing arrangement (33, 33') with respect to its associated planet gear spindle bolt (32).

9. Angle superposition device according to Claim 8, **characterized in that** a first planet gear bearing arrangement (33) is arranged between the planet gear spindle bolt (32) and the planet gear (31) as a radial bearing arrangement.

10. Angle superposition device according to Claim 8 or 9, **characterized in that** a second planet gear bearing arrangement (33') is arranged on the end side and on both sides of the planet gear (31) as an axial bearing arrangement.

11. Angle superposition device according to one of the preceding claims, **characterized in that** the planet carrier (30) accommodates at least three rotatably mounted planet gears (31) which are arranged in in each case one recess (35).

12. Angle superposition device according to one of the preceding claims, **characterized in that** the toothing on the rotor shaft (6') is in the form of a worm (10) of at least single-flight configuration but preferably at most triple-flight configuration.

13. Angle superposition device according to one of the preceding claims, **characterized in that** the toothing on the planet gears (31) is of helical form.

14. Angle superposition device according to one of the preceding claims, **characterized in that** the toothing on the planet gears (31) is formed so as to be optimized for the regions of meshing engagement with the worm (10) and with the toothing (20') of the internal gear (20).

15. Angle superposition device according to Claim 14, **characterized in that** the toothing on the planet gears (31) are divided in longitudinal direction into three toothing regions (31a, 31b, 31c), wherein the middle toothing region (31a) is optimized for meshing engagement with the worm (10) and the two outer toothing regions (31b, 31c) is optimized for meshing engagement with the toothing (20') of the internal gear (20).

16. Angle superposition device according to one of the preceding claims, **characterized in that** the first shaft is the input shaft (1) and the second shaft is the output shaft (2).

17. Angle superposition device according to one of the preceding claims, **characterized in that** the first shaft is the output shaft (2) and the second shaft is the input shaft (1).

## Revendications

1. Dispositif de superposition d'angles pour un dispositif de direction d'un véhicule comprenant une boîte de vitesses, comprenant:
- un premier arbre et un deuxième arbre qui sont disposés de manière à pouvoir tourner l'un par rapport à l'autre dans la direction longitudinale autour de leur axe longitudinal commun (8),
- un agencement de support (11, 11a, 11b) disposé de manière fixée à la carrosserie, sur lequel le premier arbre et le deuxième arbre et un arbre de rotor (6') sont positionnés de manière à pouvoir tourner, de manière au moins en partie supportée,
- un entraînement auxiliaire (6, 7) avec un stator (7) disposé sur l'agencement de support (11, 11a, 11b) et avec un arbre de rotor (6') avec un rotor (6), supporté à rotation, disposé coaxialement à l'axe longitudinal (8) et à l'un des arbres,
- et l'entraînement auxiliaire (6, 7) superposant un mouvement de rotation transmis entre le premier arbre et le deuxième arbre,
**caractérisé par**
- une transmission planétaire avec une vis sans fin (10) qui est disposée en tant que roue solaire de manière à pouvoir tourner autour d'un axe de rotation, qui est disposée au niveau de l'arbre de rotor (6') et qui est en prise avec la denture d'au moins deux pignons planétaires (31), qui sont à chaque fois disposés avec un axe de pignon planétaire (32') sur un porte-satellites (30), les pignons planétaires (31) étant à leur tour en prise avec la denture interne (20') d'une couronne dentée (20),
- le porte-satellites (30) étant connecté de manière solidaire en rotation au deuxième arbre et la couronne dentée (20) étant connectée de manière solidaire en rotation au premier arbre.

2. Dispositif de superposition d'angles selon la revendication 1, **caractérisé en ce que** l'axe de rotation de la vis sans fin (10) coïncide avec l'axe longitudinal (8).

3. Dispositif de superposition d'angles selon l'une quelconque des revendications précédentes, **caractérisé en ce qu'**au moins l'un des axes de pignon planétaire (32') et l'axe longitudinal (8) ne se coupent pas et ne sont pas orientés parallèlement l'un à l'autre.

4. Dispositif de superposition d'angles selon l'une quelconque des revendications précédentes, **caractérisé en ce que** tous les axes de pignons planétaires (32') et l'axe longitudinal (8) ne se coupent pas et ne sont pas orientés parallèlement les uns aux autres.

5. Dispositif de superposition d'angles selon l'une quelconque des revendications précédentes, **caractérisé en ce que** tous les axes de pignons planétaires (32') ne se coupent pas les uns les autres à chaque fois par paires et ne sont pas orientés parallèlement à chaque fois par paires.

6. Dispositif de superposition d'angles selon l'une quelconque des revendications précédentes, **caractérisé en ce que** :
- le stator (7) avec le rotor (6) disposé coaxialement par rapport au deuxième arbre avec l'arbre de rotor (6'), est supporté à rotation au moyen d'un support sur palier (13, 14) et au moyen d'un support sur palier (12) du deuxième arbre en vue d'un positionnement rotatif par rapport à l'agencement de support (11, 11a, 11b),
- la vis sans fin (10) est réalisée sous forme de denture sur une région d'extrémité de l'arbre de rotor (6') dans la direction du premier arbre,
- le porte-satellites (30) est connecté du côté frontal, dans la direction du premier arbre, au deuxième arbre, le porte-satellites étant réalisé en forme de cloche et entourant la vis sans fin (10) du côté frontal au niveau de l'arbre de rotor (6'), le porte-satellites (30) présentant des évidements (35) pour recevoir un pignon planétaire (31) supporté à rotation avec l'axe de pignon planétaire (32') à l'intérieur de chacun des évidements, au moins deux pignons planétaires (31) étant prévus,
- la couronne dentée (20) qui présente une denture intérieure (20') et, qui est connectée de manière solidaire en rotation au premier arbre et entoure coaxialement le porte-satellites en forme de cloche (30), de telle sorte que les pignons planétaires (31) soient positionnés entre la vis sans fin (10) et la couronne dentée (20) et soient en prise par leurs dentures avec la vis sans fin (10) et avec la denture intérieure (20') de la couronne dentée (20), de sorte qu'il se forme un agencement de transmission,
- un support sur palier (22, 23) étant prévu pour le support sur palier axial de la couronne dentée (20) par rapport au porte-satellites (30), des paliers axiaux respectifs (22, 23), espacés l'un de l'autre dans la direction axiale par rapport à l'axe longitudinal (8) étant disposés du côté frontal et de chaque côté du porte-satellites (30) entre le porte-satellites (30) et des flancs latéraux de la couronne dentée (20).

7. Dispositif de superposition d'angles selon l'une quelconque des revendications précédentes, **caractérisé en ce que** pour la formation de l'axe de pignon planétaire respectif (32'), il est prévu un boulon d'axe de pignon planétaire (32) qui fait saillie des deux côtés du pignon planétaire (31) et qui est disposé dans un renfoncement respectif (36) du porte-satellites (30) qui est prévu latéralement au niveau de l'un des évidements (35) du porte-satellites (30).

8. Dispositif de superposition d'angles selon la revendication 7, **caractérisé en ce que** le pignon planétaire (31) présente un support sur palier de pignon planétaire (33, 33') par rapport à son boulon d'axe de pignon planétaire associé (32).

9. Dispositif de superposition d'angles selon la revendication 8, **caractérisé en ce qu'**un premier support sur palier de pignon planétaire (33) est disposé entre le boulon d'axe de pignon planétaire (32) et le pignon planétaire (31) en tant que support sur palier radial.

10. Dispositif de superposition d'angles selon la revendication 8 ou 9, **caractérisé en ce qu'**un deuxième support sur palier de pignon planétaire (33') est disposé du côté frontal et des deux côtés du pignon planétaire (31) en tant que support sur palier axial.

11. Dispositif de superposition d'angles selon l'une quelconque des revendications précédentes, **caractérisé en ce que** le porte-satellites (30) reçoit au moins trois pignons planétaires (31) supportés à rotation, qui sont disposés dans un évidement respectif (35).

12. Dispositif de superposition d'angles selon l'une quelconque des revendications précédentes, **caractérisé en ce que** la denture au niveau de l'arbre de rotor (6') est réalisée en tant que vis sans fin (10) avec au moins un pas mais de préférence toutefois au maximum avec trois pas.

13. Dispositif de superposition d'angles selon l'une quelconque des revendications précédentes, **caractérisé en ce que** la denture au niveau des pignons planétaires (31) est orientée obliquement.

14. Dispositif de superposition d'angles selon l'une quelconque des revendications précédentes, **caractérisé en ce que** la denture au niveau des pignons planétaires (31) est formée de telle sorte qu'elle soit optimisée pour les régions des engagements de denture dans la vis sans fin (10) et dans la denture (20') de la couronne dentée (20).

15. Dispositif de superposition d'angles selon la revendication 14, **caractérisé en ce que** la denture au niveau des pignons planétaires (31) dans le direction longitudinale sont divisées en trois régions de denture (31a, 31b, 31c), la région de denture centrale (31a) pour l'engagement de denture avec la vis sans fin (10) étant optimisée et les deux régions de denture extérieures (31b, 31c) étant optimisées pour l'engagement de denture avec la denture (20') de la couronne dentée (20).

16. Dispositif de superposition d'angles selon l'une quelconque des revendications précédentes, **caractérisé en ce que** le premier arbre est l'arbre d'entraînement (1) et le deuxième arbre est l'arbre de prise de force (2).

17. Dispositif de superposition d'angles selon l'une quelconque des revendications précédentes, **caractérisé en ce que** le premier arbre est l'arbre de prise de force (2) et le deuxième arbre est l'arbre d'entraînement (1).
